# EUROPEAN PATENT SPECIFICATION

(11) **EP 3 962 655 B1**
(45) Date of publication and mention of the grant of the patent: **27.08.2025**
(21) Application number: 20724917.8
(22) Date of filing: 30.04.2020
(51) Int. Cl.: B02B 3/04

(54) **ABRADING APPARATUS**
SCHLEIFVORRICHTUNG
APPAREIL D'ABRASION

(30) Priority: 02.05.2019 GB 201906207; 02.05.2019 GB 201906208; 02.05.2019 GB 201906209; 02.05.2019 GB 201906211
(43) Date of publication of application: 09.03.2022
(73) Proprietor: Koolmill Systems Ltd, Shirley, Solihull West Midlands B90 2EA (GB)
(72) Inventor: ANDERSON, Alec, Solihull, West Midlands B90 2AE (GB)
(74) Representative: HGF
(86) International application number: PCT/GB2020/051057
(87) International publication number: WO 2020/222008

(56) References cited:
- WO-A1-2008/043991
- WO-A2-2008/044014
- US-A1- 2015 282 518
- US-A1- 2019 059 436

## Description

This invention relates generally to an apparatus and a method for surface treatment of objects. More specifically, although not exclusively, this invention relates to apparatus and methods for surface abrasion of small objects, particularly grains or seeds, including rice, cereals, legumes, nuts and the like; cleaning aggregate and objects of wood, plastics, mineral or metal.

Various apparatus for surface abrasive treatment of small objects are already known. Typical apparatus include a chamber, a moving abrasive surface which passes across a transverse wall of the chamber, an inlet for objects to be abraded, and an outlet for abraded objects. The apparatus is arranged so that, in use, objects circulate in the chamber and material removed from the objects passes under the transverse wall. The chamber has a containment wall, which is opposite the abrasive surface and is sufficiently close thereto that, in use, pressure is exerted on the circulating objects to press the lowermost objects against the bottom.

In the aforementioned apparatus, an endless belt having an abrasive surface moves over a horizontal plate to provide an abrasive moving bottom. The alignment of the belt with the generally flat plate is not always accurate, leading to an increase in power consumption and a risk that there will be incomplete separation of the abraded material from the abraded small objects.

In order to address these issues, EP 0755304 proposes an apparatus in which small objects are milled in a machine comprising a rotating vertical drum having an endless abrasive belt on outer surface of the drum. A plurality of vertically extending chambers are spaced about the drum and have a rectangular cross-section with an open side facing the drum so that the belt acts as a floor to the chambers. Each chamber includes an inlet at its top, a main outlet at its bottom, an upstream wall and a downstream, milling wall against which small objects entrained with the moving belt collide. A gap is provided between each milling plate and the belt such that objects ride up the milling plate, whilst surface material removed from the objects passes through the gap and is directed through a subsidiary outlet alongside the main outlet of each chamber.

The rectangular cross-section of the chambers of EP 0755304 was found to be prone to regions of flow stagnation, thereby resulting in inconsistent treatment of the objects treated therein. To address this issue, EP 2094389 proposes a chamber having a substantially rectangular cross-section with chamfered corners to approximate the peripheral flow path of the objects within the chamber. This has been found to improve drastically the consistency of treatment of the objects exiting the chamber. However, the Applicant has observed that steps can be taken to further improve the consistency of milling and of the operation of the machine.

Furthermore, in the abrading apparatus described in each of EP 0755304 and EP 2094389, the effectiveness of the milling process in such vertical mills, that is to say the extent to which unwanted surface material is removed from the objects, is dependent upon several factors. In the case of milling grains, for example, the characteristics of the grains themselves, such as moisture, temperature, shape and surface characteristics, and other process variables, such as operating temperatures, pressures and flow characteristics of the grains within the chamber. Some of these process variables can be controlled at least in part, for example by the speed of the belt, the geometry of the chamber and the size of the outlet.

One controllable parameter for varying this pressure is described in EP 2094389, which proposes varying the depth of the chamber along its length to vary the pressure exerted on the grains as they progress through the chamber. Another such control parameter is described in EP 2089162, which proposes removable outlet inserts with different outlet sizes for controlling the flow of objects allowed to pass therethrough, thereby controlling the back pressure within the chamber. EP 2089162 also explains that the local pressure within the chamber is dependent on the speed of travel of the belt and its abrasiveness.

One non-exclusive aim of this invention is to improve the consistency of milling performance across a broad range of processing parameters and over time, particularly at high treatment pressures. Another non-exclusive aim of this invention is to improve further the energy efficiency of the aforementioned abrading apparatus. A yet further non-exclusive aim of this invention is to reduce the need for, and frequency of, operator and maintenance intervention.

Accordingly, the invention provides an abrading apparatus comprising a drum, a movable abrasive surface about at least part of the circumferential surface of the drum and one or more treatment chambers mounted about the drum, each treatment chamber having first and second opposite wall portions extending toward the abrasive surface and a third wall portion adjoining the first and second wall portions, the first wall portion comprising an upstream face and the second wall portion comprising a downstream face, the upstream and downstream faces describing an open side facing the drum such that the abrasive surface forms a wall of the chamber, wherein the drum comprises a radial plane parallel to the downstream face of the chamber and the distance between the radial plane and the downstream face is less than the distance between the radial plane and the upstream face such that the downstream face is adjacent the radial plane.

Displacing the chamber to this, off-centre position has been found to reduce both the consumption of energy by the apparatus and the instances of broken objects (e.g. grains of rice). This combined, synergistic effect has been found to improve drastically the efficiency of the apparatus, even at very high treatment pressures.

Without wishing to be bound by any particular theory, it is believed that this is due to the orientation of the downstream, milling face relative to the direction of the flow of the objects within the chamber. More specifically, as the milling face approaches a radial orientation relative to the moving abrasive surface, it approaches a substantially perpendicular orientation relative to the tangential flow direction of the impacting objects. As a result, it is believed that the objects impacting the downstream face are less prone to being wedged into an acute-angled corner between the milling face and the abrasive belt, thereby moving more readily along it to follow the flow path illustrated in EP 2094389.

It is also believed that this arrangement reduces the tendency of the chamber to rotate, or cock, about its mounting, urging the downstream face of the chamber away from the abrasive surface and changing the size of the gap between the chamber and abrasive surface adjacent the downstream face. Such cocking is believed to result in more aggressive interaction between the entrained objects and the downstream face in use. As such, it has been observed that the claimed arrangement reduces energy consumption

It will be appreciated that, as used herein, the use of the term "downstream" in relation to the chamber face refers to the face of the chamber against which the flow of objects will impact, which is a function of the normal direction of rotation of the drum.

The distance between the radial plane and the downstream face may be less than ¾ or less than ½ or less than ¼ of the distance between the radial plane and the upstream face. The downstream face may be substantially aligned with the radial plane. The downstream face may be substantially perpendicular to a facing or adjacent portion of the abrasive surface and/or perpendicular to a tangential plane of the drum.

The downstream face may lie substantially on or along the radial plane. The downstream face and the radial plane may be substantially coplanar. The downstream face may comprise an inner face. The downstream face may comprise a milling face. The upstream face may be substantially parallel to the downstream face and/or to the radial plane. The upstream face may comprise an inner face. The upstream face may comprise a redirecting or recirculating face.

At least one or the or each treatment chamber may comprise an open channel section, e.g. with an open side thereof facing the drum such that the abrasive surface forms a wall of the chamber. The apparatus may comprise one or more chamber bodies. The each chamber body may comprise or describe the or a respective treatment chamber. The chamber body may include the upstream and/or downstream faces.

The or each treatment chamber or body may comprise a substantially rectangular cross-section, which may, but need not, have one or more chamfered corners. The or each treatment chamber or body may comprise an asymmetric cross-section, which may be asymmetric about any plane, such as a plane parallel to the downstream and/or upstream face(s).

The asymmetric cross-section may comprise or be provided by a substantially rectangular cross-section with two chamfered or rounded corners, e.g. wherein the chamfers or rounded corners are dissimilar and/or asymmetric. Alternatively, the cross-section may comprise or be provided by an asymmetric part-elliptical, part-obround or part-ovoid shape.

The second wall or wall portion may be spaced from the first wall or wall portion, e.g. in the direction of movement of the abrasive surface. The first wall or wall portion may comprise an upstream wall. The second wall or wall portion may comprise a downstream wall. At least part of the third wall portion may be perpendicular to the first and second wall portions.

The third wall portion may be joined to the first and second wall portions directly, e.g. to provide the substantially rectangular cross-section.

Alternatively, the third wall portion may be shaped to at least partially approximate the peripheral flow path of the objects. The third wall portion may be joined to the first wall portion by a chamfer wall or wall portion, e.g. a first chamfer wall or wall portion. Similarly, the third wall portion may be joined to the second wall portion by a chamfer wall or wall portion, e.g. a second chamfer wall or wall portion. Additionally or alternatively, the third wall portion may be at least partially curved, e.g. to provide the part-elliptical, part-obround or part-ovoid cross-section.

The or each treatment chamber may comprise an inlet, e.g. for receiving objects to be treated. The or each treatment chamber may comprise an outlet or primary outlet, e.g. through which treated objects may be discharged. The or each treatment chamber may comprise a secondary outlet, e.g. through which abraded material may be discharged. A downstream side of the or each treatment chamber, e.g. the downstream face or wall, may be spaced from the abrasive surface, for example to provide a gap or clearance therebetween.

The gap or clearance may comprise or provide the secondary outlet. At least one of treatment chamber, e.g. the downstream side thereof, may comprise an extension or extension wall. The extension or extension wall may extend from the downstream side or wall. The extension or extension wall may be configured to at least partially contain abraded material discharged from the secondary outlet, e.g. between adjacent treatment chambers. A discharge chamber may be described by the extension or extension wall and adjacent treatment chambers.

The or each treatment chamber or body may be elongate and/or extend parallel to the axis of the drum. The inlet may be at a first end of the or each treatment chamber or body and/or the primary outlet may be at a second end of the or each treatment chamber or body. The inlet may be at or adjacent a first end, e.g. a top or upper end, of the drum and/or the primary outlet may be at or adjacent a second end, e.g. a bottom or lower end, of the drum.

The apparatus may comprise a roller and/or an abrasive loop, which may be endless. The roller may be spaced from and/or substantially parallel to the drum. The abrasive loop may comprise or provide the abrasive surface and/or may be mounted on the drum and/or the roller. The apparatus may comprise a tracking means, e.g. for adjusting automatically the position, e.g. axial position, of the abrasive loop relative to the drum and/or roller. The tracking means may comprise an analogue sensing means, e.g. for determining the position of the abrasive loop.

The applicant has found that a versatile, yet cost effective tracking the abrasive loop can be achieved using an analogue sensing means for determining the axial position of the loop. This enables the tracking means to anticipate and adjust dynamically the movement of the belt, which has been found to stabilise the belt position and improve the overall wear of the abrasive loop. In fact, the use of an analogue sensing means has been found to be surprisingly effective at optimising the operation of the abrading apparatus. Without wishing to be bound by any theory, this is believed to be the result of less aggressive forces being applied to the abrasive belt as a result of the dynamic, constant and gradual adjustment.

At least part of the analogue sensing means may be located adjacent one or both edges of the abrasive loop. The analogue sensing means may comprise a first, e.g. upper, sensing means, which may be adjacent a first, e.g. upper, edge or portion of the abrasive loop. The analogue sensing means may comprise a second, e.g. lower, sensing means, which may be adjacent a second, e.g. lower, edge or portion of the abrasive loop. The analogue sensing means may comprise an ultrasonic or electromagnetic sensing means. The analogue sensing means may comprise an optical sensing means, for example a light sensing means.

The or each sensing means may comprise a transmitter, which may be on a first side of the abrasive loop, and/or a sensor, which may be on a second side of the abrasive loop. The or each sensing means may comprise a first wall or mask with a first aperture, which may be on the first side, and/or a second wall or mask with a second aperture, which may be on the second side.

The transmitter may be operable to transmit, in use, an analogue signal, e.g. through the first aperture and/or toward the abrasive loop and/or toward the sensor. The transmitter may be on the opposite side of the first wall or mask to the abrasive loop, for example such that the first wall or mask masks part of the analogue signal transmitted, in use, by the transmitter. The sensor may be operable to detect and/or measure, in use, an analogue signal transmitted by the transmitter, e.g. through the second aperture.

The first and/or second aperture(s) may be elongate and/or may comprise a slot. The first and/or second aperture(s) may comprise a lateral dimension, which may be along or substantially parallel to the adjacent edge of the abrasive loop. The first and/or second aperture(s) may comprise a longitudinal dimension, which may be orthogonal or perpendicular to the lateral dimension. The longitudinal dimension of the first and/or second aperture(s) may be along or substantially parallel to an axis (e.g. of rotation) of the drum and/or an axis (e.g. of rotation) of the roller.

The or each transmitter may comprise a light transmitter or a light source. The or each transmitter may be operable to emit visible light. Alternatively, the transmitter may be configured to emit infrared or ultraviolet light. The or each transmitter may be operable to emit at least 50 lumens, preferably at least 100 lumens, more preferably at least 200 lumens, such as 250 lumens or more or 300 lumens or more. Preferably, the or each transmitter comprises one or more light emitting diodes (LEDs). The LED(s) may be configured to emit white light.

The or each sensor may comprise a light sensor. The or each sensor may comprise a photoelectric device or a photo sensor. The or each sensor may comprise a photoresistor or light dependent resistor. The photoresistor or light dependent resistor may comprise a major dimension of at least 5 mm, preferably at least 7 or 8 mm and more preferably at least 10 mm. Alternatively, the or each sensor may comprise a photodiode.

The drum may comprise a substantially cylindrical body with a plurality of the treatment chambers mounted about the periphery of the drum. The roller may comprise a tension roller or a tail roller. The drum may be rotatable about an axis, e.g. a drum axis, and/or the roller may be rotatable about an axis, e.g. a roller axis, that may be substantially parallel to the axis of the drum.

The orientation of the roller axis, e.g. relative to the drum axis, may be adjustable. The roller may be pivotally mounted at one of its ends, e.g. relative to the drum. The roller may be rotatably mounted to a cradle and the cradle may be pivotally mounted at or adjacent one of its ends, e.g. relative to the drum.

The tracking means may be operable to change, in use, the orientation of the roller axis, e.g. thereby to cause the abrasive loop to move toward one end of the drum or roller and/or along the axis of the drum and/or roller. The tracking means may comprise an actuator, which may be operatively connected to the roller or to the cradle. The actuator may be operable to cause the roller or cradle to pivot, e.g. relative to the drum.

The apparatus may comprise a roller actuator operatively connected to the roller. The roller actuator may be operable to modify the orientation of the roller axis relative to the drum axis, e.g. to track, in use, the belt toward an end of the drum and/or roller.

The apparatus may comprise an enclosure, which may comprise an isolation chamber. The isolation chamber may house at least part of the roller and/or may inhibit, in use, abraded material from being captivated between the roller and the abrasive loop.

It has been observed by the Applicant that the provision of an isolation chamber, which inhibits abraded material from entering the vicinity of the tension roller, reduces energy consumption and extends the useful life of the belt. Without wishing to be bound by any particular theory, it is believed that this is due to the fact that air entrained with the abrasive loop includes by-products of the treated small objects, which can be released within the enclosure and become trapped between the tension roller and abrasive loop. As a result, these by-products can be forced into the rear side of the belt and become wedged between the drum and the belt, thereby causing the belt to stand proud of the drum and urging it toward the chamber(s). This causes variations in treatment characteristics and can ultimately damage the belt prematurely.

The apparatus may comprise isolation means, e.g. for minimising the quantity of abraded material within the isolation chamber. The isolation means may be configured for inhibiting air entrained with the abrasive loop or belt from entering the isolation chamber. The isolation means may be configured for evacuating abraded material from the enclosure.

The enclosure may comprise a primary chamber which houses at least part of the drum. The enclosure may comprise one or more interface portions joining the primary chamber and the isolation chamber. The isolation means or interface portion(s) may comprise one or more screens or screen portions, which may extend from the interface portion(s) toward the abrasive loop or belt, e.g. for inhibiting air entrained with the abrasive loop or belt from entering the isolation chamber.

The screen(s) or screen portion(s) may terminate adjacent the endless abrasive loop or belt, e.g. for inhibiting air entrained with the abrasive loop or belt from entering the isolation chamber. The screen(s) or screen portion(s) may comprise a wall and/or may extend from the interface portion(s) toward the endless abrasive loop or belt.

The screen(s) or screen portion(s) may be flexible and/or may comprise a brush element or a sheet of flexible material such as an elastomer or other plastics material. Alternatively, the screen(s) or screen portion(s) may be rigid and/or may comprise a sheet of metal, such as steel, or another material, which may be rigid.

The apparatus may comprise an evacuation means or evacuator, e.g. for evacuating abraded material or air containing abraded material from the enclosure. The evacuation means or evacuator may comprise a vacuum or suction means or vacuum, e.g. for drawing air containing abraded material from the enclosure.

The evacuation means or evacuator may comprise a pump, e.g. an air pump or vacuum pump. The evacuation means or evacuator may be operatively or fluidly connected to the isolation chamber, e.g. for evacuating air containing abraded material therefrom.

The or a further evacuation means or evacuator may be operatively or fluidly connected to the primary chamber, e.g. for evacuating air containing abraded material therefrom. The or a further evacuation means or evacuator may comprise an inlet, which may be positioned to evacuate air entrained with the abrasive loop or belt before it enters the isolation chamber. The inlet may be in the primary chamber and/or adjacent the interface portion(s).

The apparatus may comprise a further evacuation means or evacuator operatively connected to the primary outlet of the or each treatment chamber, e.g. for evacuating treated objects therefrom. The or a further evacuation means or evacuator may be operatively connected to the secondary outlet of the or each treatment chamber or the discharge chamber, e.g. for evacuating abraded material therefrom.

At least one or each of the evacuation means or evacuators may comprise a suction assembly. The or each suction assembly may comprise a vacuum pump and/or a vacuum pipe and/or a storage container or bag within which abraded material may be stored.

The isolation chamber may approximate the shape of the tension roller and/or part of the endless abrasive loop or belt which extends between the drum and tension roller. The isolation chamber may comprise a substantially triangular cross-section, e.g. with a rounded apex. The isolation chamber may comprise a substantially prism-shaped chamber, which may have a rounded apex or apex edge.

Alternatively, the isolation chamber may comprise a substantially cuboid, e.g. rectangular cuboid, shape. The isolation chamber may be at least partially transparent or translucent. The isolation chamber may comprise one or more windows, e.g. for viewing part of the abrasive loop and/or the tension roller. The or each window may comprise a sheet of transparent or translucent material, for example a plastics material such as an acrylic.

The apparatus may comprise supply or feed means, e.g. for feeding, in use, objects into the inlet. The feed means may comprise a hopper, e.g. for storing objects to be treated. The hopper may be connected to the inlet of the or each treatment chamber or body. The feed means may comprise one or more feed pipes, each of which may be connected to the inlet of the or each treatment chamber or body and/or to the hopper or another material source.

The apparatus may comprise one or more storage containers or bags for receiving treated objects. The apparatus may comprise conveying means or conveyor for conveying, in use, treated objects from the primary outlet, e.g. to the storage container(s) or bag(s). The storage container(s) or bag(s) may comprise one or more primary storage container(s) or bag(s).

The apparatus may comprise a storage container(s) or bag(s) for receiving abraded material from the secondary outlet. The apparatus may comprise suction means for drawing, in use, abraded material from the secondary outlet, e.g. and/or for supplying it to the storage container(s) or bag(s). The storage container(s) or bag(s) may comprise a secondary storage container(s) or bag(s).

The apparatus may comprise drive means, which may be operable to rotate the drum and/or the roller. The apparatus may comprise control means, which may be configured to control the drive means and/or tracking means. The apparatus may comprise sensing means, e.g. for sensing one or more process variables.

The sensing means may be operatively connected to the control means. The control means may be configured to vary, for example automatically, one or more control parameters of the apparatus, e.g. in response to one or more process variables sensed by the sensing means.

The process variable(s) may comprise a pressure (or a value indicative thereof) in a region of the apparatus or chamber. The region may comprise an inlet, outlet, intermediate or central region of the chamber. The sensing means may comprise one or more pressure sensing means or sensors, which may be configured or operable to measure, determine or estimate the pressure (or a value indicative thereof) in the chamber or a region thereof.

The one or more pressure sensing means or sensors may comprise a sensor, e.g. a first or inlet sensor, which may be configured or operable to measure, determine or estimate the pressure (or a value indicative thereof) in an inlet or inlet region of the chamber.

The one or more pressure sensing means or sensors may comprise a sensor, e.g. a second or outlet sensor, which may be configured or operable to measure, determine or estimate the pressure (or a value indicative thereof) in an outlet or outlet region of the chamber.

The one or more pressure sensing means or sensors may comprise a sensor, e.g. a third or intermediate sensor, which may be configured or operable to measure, determine or estimate the pressure (or a value indicative thereof) in an intermediate or central region of the chamber, for example between the inlet and the outlet.

The process variable(s) may comprise a humidity or moisture (or a value indicative thereof) in a region of the apparatus, chamber, supply or feed means. The region may comprise an inlet, outlet, intermediate or central region of the chamber. The region may comprise an inlet, outlet, intermediate or central region of the supply or feed means, e.g. the hopper.

The sensing means may comprise one or more humidity or moisture sensing means or sensors, which may be configured or operable to measure, determine or estimate the humidity or moisture (or a value indicative thereof) in the chamber, supply or feed means or a region thereof.

The one or more humidity or moisture sensing means or sensors may comprise a plurality of sensors each located, configured or operable to measure, determine or estimate the humidity or moisture (or a value indicative thereof) in any two or more such regions.

The process variable(s) may comprise a load or power input or output or current draw of the drive means (or a value indicative thereof). The sensing means may comprise a power meter, ammeter or torque meter or one or more sensors therefor.

The process variable(s) may comprise a value indicative of a quantity (e.g. number, proportion or percentage) of damaged or broken objects treated by the apparatus or chamber. The sensing means may comprise a vision system, which may be operable to determine the value.

The sensing means or vision system may comprise an image capture means for capturing one or more images of treated objects, e.g. as they are discharged from the primary outlet and/or as they are conveyed along the conveying means or conveyor and/or as they are discharged or conveyed, in use, from the primary outlet, e.g. to the storage container or bag.

The sensing means or vision system may be operable or configured to compare the one or more captured images to a reference image, outline or model, for example to determine the value indicative of the quantity of damaged or broken objects treated by the apparatus or chamber.

The sensing means or vision system may be operable or configured to capture one or more images of treated objects associated with each of two or more treatment chambers or two or more groups of treatment chambers separately or independently.

The process variable(s) may comprise a value indicative of a quantity (e.g. weight, volume, proportion or percentage) of material removed from the objects treated by the apparatus or chamber, e.g. the quantity of abraded material. The sensing means may be associated with the storage container(s) or bag(s) for receiving abraded material from the secondary outlet.

The sensing means may comprise one or more weight sensing means or sensors or scales, e.g. for measuring the weight of abraded material. The sensing means may comprise a fill level sensing means or sensor, e.g. for measuring, determining or estimating the quantity of abraded material within the storage container(s) or bag(s).

The process variable(s) may comprise a value indicative of a quality of material removed from the objects treated by the apparatus or chamber, e.g. the quality of abraded material. The sensing means may comprise a vision system, which may be operable to determine the value.

The sensing means or vision system may comprise an image capture means for capturing one or more images of the abraded material, e.g. as it is discharged from the secondary outlet and/or as it is discharged or conveyed, in use, from the secondary outlet, e.g. to the storage container(s) or bag(s).

The sensing means or vision system may be operable or configured to compare the one or more captured images to a reference image, outline or model, for example to determine the value indicative of the quality of the abraded material, e.g. the colour or other visual characteristic thereof. The sensing means or vision system may be operable or configured to capture one or more images of the abraded material associated with each of two or more treatment chambers or two or more groups of treatment chambers separately or independently.

The control parameter(s) may comprise the speed of the drive means, abrasive surface or substrate. For example, if the substrate is stationary, fixed or immovable, e.g. relative to the treatment chamber(s), and the abrasive surface is movable relative to the substrate or treatment chamber(s), the control parameter(s) may comprise the speed of the abrasive surface relative to the substrate or treatment chamber(s).

Alternatively, if the substrate is movable, e.g. relative to the treatment chamber(s), and the abrasive surface is fixed relative to the substrate, the control parameter(s) may comprise the speed of the substrate and/or abrasive surface, e.g. relative to the treatment chamber(s).

The apparatus may comprise a frame and the treatment chambers may be fixed or immovable or stationary relative to the frame. The apparatus may comprise a drum and the substrate may comprise an outer, e.g. circumferential, surface of the drum. The drum may be rotatable, e.g. relative to the frame and/or relative to the treatment chamber(s). The drive means may comprise a drive motor for rotating the drum and/or the abrasive surface relative to the treatment chamber(s).

The outer surface of the drum may be abrasive, thereby to provide the abrasive surface of the apparatus. Alternatively, the apparatus may comprise an abrasive loop, which may be endless and/or may comprise or provide the abrasive surface. The apparatus may comprise a roller, which may be rotatable, e.g. relative to the frame. The roller may be spaced from and/or substantially parallel to the drum. The abrasive loop may be mounted on the drum and/or the roller, if present, and/or rotatable therewith.

The control parameter(s) may comprise the speed, e.g. rotational speed, of the drum or drive means, e.g. relative to the treatment chamber(s) or frame. The control parameter(s) may comprise the speed of the abrasive surface or loop, e.g. relative to the treatment chamber(s) or frame or, if the drum is stationary, relative to the drum.

The control parameter(s) may comprise one or more dimensional parameters of the chamber. The control or dimensional parameter(s) may comprise the size of the or an outlet, e.g. through which treated objects pass, or the size of the or an inlet, e.g. through which objects to be treated are introduced.

The control or dimensional parameter(s) may comprise a depth of one or more regions of the chamber, e.g. relative to the abrasive surface. The control or dimensional parameter(s) may comprise a width of one or more regions of the chamber, e.g. a dimension parallel to the abrasive surface. The control or dimensional parameter(s) may comprise a shape of the chamber(s).

Varying the control parameter(s) may comprise increasing the speed, e.g. rotational speed, of the drive means, abrasive surface or substrate. Varying the control parameter(s) may comprise increasing the speed setting of, or power or current supplied to, the drive means.

Varying the control parameter(s) may comprise changing one or more of the dimensional parameters of the chamber. Varying the control parameter(s) may comprise adjusting the size of the outlet or primary outlet. For example, the chamber may comprise an adjustable slide gate mechanism, which may be operable to adjust the size of the outlet or primary outlet, such as by an actuator.

One or more of the walls (e.g. the third wall) of the treatment chamber(s) may be movable relative to the other walls (e.g. the first and second walls) and may be movable by an actuator.

Varying the control parameter(s) may comprise causing the actuator(s) to adjust the position of the slide gate or movable wall(s), thereby to modify the size of the outlet or the geometry (e.g. depth) of the treatment chamber(s).

In embodiments, the movable wall(s) may be flexible or segmented, e.g. thereby to enable two or more region(s) of the treatment chamber(s) to be varied relative to one another.

The control means may be configured to decrease the size of the outlet or primary outlet, for example in response to an increased moisture or humidity measured by the moisture or humidity sensing means.

The control means may be configured to increase the size of the outlet or primary outlet, for example in response to an decreased moisture or humidity measured by the moisture or humidity sensing means.

The control means may be configured to decrease or increase the size of the outlet or primary outlet after a predetermined period of time, e.g. corresponding to the anticipated delay for objects having an increased or decreased moisture content to enter the treatment chamber 5.

The control means may comprise one or more reference value(s) for control parameter(s) and/or process variable(s) which are appropriate for processing one or more different types of objects, e.g. grains. The control means may comprise a database, which may contain the reference value(s).

The control means or database may comprise or one or more reference tables, which may contain the reference value(s). Additionally or alternatively, the control means may comprise one or more algorithms or formulae for determining and/or controlling appropriate control parameter(s) based on one or more measured process variable(s).

The control means may be configured to stop, e.g. automatically, the apparatus in response to an anomaly or unanticipated change in one or more measured process variable(s). The control means or one or more algorithms thereof may be configured to determine a fault state based on one or more measured process variable(s). For example, the fault state may correspond to a damaged abrasive belt. The fault state may correspond to a slipping abrasive belt. The fault state may correspond to an unexpected change in grain type.

Another aspect of the invention provides a portable mill comprising an abrading apparatus as described above, power supply means for powering the abrading apparatus and control means for controlling one or more control parameters of the abrading apparatus and/or of the power supply means, the control means comprising wireless telecommunication means for communicating with a remote server, wherein the control means is configured to control at least one control parameter of the abrading apparatus and/or of the power supply means in response to a command received, in use, by a remote server.

The abrading apparatus may include one or more features of the abrading apparatus described above. The power supply means may comprise one or more of an engine-generator, such as a diesel generator, solar panels or photovoltaic cells, fuel cells, or other electric storage means.

The control means may comprise one or more control units or controllers, which may be operatively connected (e.g. via a wired or wireless connection) to the abrading apparatus or power supply means. The portable mill or abrading unit may comprise a container, e.g. a shipping container. At least part of the abrading apparatus and/or power supply means and/or control means may be received within or mounted on the container.

A server, e.g. a remote server, may be provided, which is configured or adapted to communicate with a portable mill or abrading unit, e.g. a portable mill or abrading unit as described above.

The server may be operable or configured to vary, e.g. automatically or by manual intervention, one or more control parameters of the abrading apparatus. As such, the server may form part of the control means of the aforementioned abrading apparatus. The control means may comprise a local control means associated and/or located with the abrading apparatus.

The remote server may comprise a costing module or algorithm, which may be configured to calculate a cost associated with operation of the abrading apparatus or portable mill. The costing module or algorithm may be configured to calculate a cost associated with one or more of the operating and/or control parameters and/or an operating period. The costing module or algorithm may be configured to calculate a cost based on a period of operation.

Where the apparatus or portable mill comprises one or more weight sensors for measuring the quantity of objects loaded into or processed by the apparatus, the costing module may be configured to calculate a cost based at least in part on a weight measured by at least one of the weight sensor(s).

The costing module may be configured to calculate a cost based at least in part on a weight of objects to be treated, e.g. loaded into the hopper, and/or a weight of treated objects and/or a weight of damaged or broken objects and/or a weight of abraded material.

The control unit may be configured to monitor a change in one or more of said weights over time and/or may include one or more redundant sensors for ensuring the accuracy of the quantity of objects treated.

The remote server may comprise a customer database, which may include one or more customer details (e.g. one or more of a contact name, address, telephone number, account number, credit limit, rating or history and/or payment terms).

The remote server may comprise an invoicing module or algorithm, which may be configured to generate an invoice, e.g. based on one or more costs calculated by the costing module or algorithm.

The control unit may include an input means, e.g. for capturing data relating to a customer or payment means (e.g. credit card). The control unit may be configured to send to the remote server, e.g. via the wireless telecommunications means, data relating to the customer or payment means.

The remote server may comprise a payment module or algorithm, which may be configured to associate an invoice generated by the invoicing module or algorithm with a customer or payment means.

The payment module or algorithm may be configured to retrieve a payment, e.g. from the payment means or a payment means associated with a customer. The retrieved payment may correspond to an invoice generated by the invoicing module.

For the avoidance of doubt, as used herein the term invoice may refer simply to a transaction, which may be stored on the server, and does not require an accounting document to be generated.

Another aspect of the invention provides an abrading system comprising one or more portable mills as described above and a remote server, e.g. as described above.

The system may be configured such that, in the absence of a command, e.g. a contradicting command, received by the server, the local control means is operable or configured to vary, e.g. automatically, one or more control parameters of the abrading apparatus in response to one or more process variable sensed by the sensing means.

Alternatively, the server may be operable or configured to issue one or more commands to the local control means to cause it to vary one or more control parameters of the abrading apparatus, for example in response to one or more process variables sensed by the sensing means, which may have been received and processed by the server.

For purposes of this disclosure, and notwithstanding the above, it is to be understood that any controller(s), control units and/or control modules described herein may each comprise a control unit or computational device having one or more electronic processors. The controller may comprise a single control unit or electronic controller or alternatively different functions of the control of the system or apparatus may be embodied in, or hosted in, different control units or controllers or control modules.

As used herein, the terms "control unit" and "controller" will be understood to include both a single control unit or controller and a plurality of control units or controllers collectively operating to provide the required control functionality. A set of instructions could be provided which, when executed, cause said controller(s) or control unit(s) or control module(s) to implement the control techniques described herein (including the method(s) described herein). The set of instructions may be embedded in one or more electronic processors, or alternatively, may be provided as software to be executed by one or more electronic processor(s). For example, a first controller may be implemented in software run on one or more electronic processors, and one or more other controllers may also be implemented in software run on or more electronic processors, optionally the same one or more processors as the first controller.

It will be appreciated, however, that other arrangements are also useful, and therefore, the present invention is not intended to be limited to any particular arrangement. In any event, the set of instructions described herein may be embedded in a computer-readable storage medium (e.g., a non-transitory storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM ad EEPROM); flash memory; or electrical or other types of medium for storing such information/instructions.

Within the scope of this application it is expressly intended that the various aspects, embodiments, examples and alternatives set out in the preceding paragraphs, in the claims and/or in the following description and drawings, and in particular the individual features thereof, may be taken independently or in any combination, provided they are consistent with the claims. That is, all embodiments and/or features of any embodiment can be combined in any way and/or combination, unless such features are incompatible and provided that they are consistent with the claims. For the avoidance of doubt, the terms "may", "and/or", "e.g.", "for example" and any similar term as used herein should be interpreted as non-limiting such that any feature so-described need not be present.

Embodiments of the invention will now be described by way of example only with reference to the accompanying drawings in which:
Figure 1 is a partial side elevation of an abrading apparatus according to a first example showing two of its chambers;
Figure 2 is a schematic top view of the abrading apparatus illustrating the layout of the drum, tail roller, abrasive belt and treatment chambers about part of the drum;
Figure 3 is a partial section view illustrating a chamber and its position relative to the abrasive belt as compared with a prior art arrangement;
Figure 4 is a partial section view similar to Figure 3, but illustrating an alternative chamber design;
Figure 5 is a schematic top view of an abrading apparatus according to a second example;
Figure 6 is a schematic side view of the abrading apparatus of Figure 5;
Figure 7 is a schematic representation of the abrasive belt position sensing assembly of the apparatus of Figure 5;
Figure 8 is a chart illustrating the light intensity as a function of the belt position as measured by the belt position sensing assembly of Figure 7 when using a photoresistor as the light sensor;
Figure 9 is a chart illustrating the light intensity as a function of the belt position as measured by the belt position sensing assembly of Figure 7 when using a photodiode as the light sensor; and
Figure 10 is a schematic representation of a milling system incorporating the abrasion apparatus according to the second example.

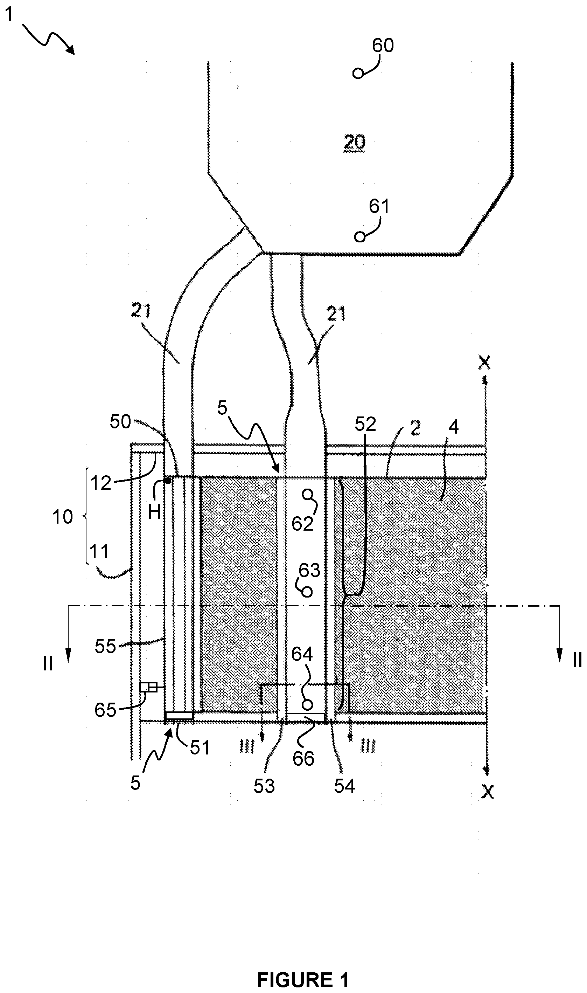

Referring now to Figures 1 to 3, there is shown an abrading apparatus 1 including an enclosure 10 within which is received a drum 2, a tension or tail roller 3 spaced from and substantially parallel to the drum 2, an endless abrasive loop or belt 4 mounted over the drum 2 and tail roller 3, eight treatment chambers 5 mounted about the drum 2 and a control unit 6 mounted externally of the enclosure 10. A loading hopper 20 is located above the apparatus 1, which includes feed pipes 21 connected thereto and two moisture sensors 60, 61. Each feed pipe 21 is connected to the loading hopper 20, extends through a respective hole (not shown) in the enclosure 10 and feeds a respective one of the treatment chambers 5. A first moisture sensor 60 is in an upper portion of the hopper 20 for measuring the moisture content of objects as they are loaded into the hopper 20, the while second moisture sensor 61 is adjacent the base of the hopper 20 for measuring the moisture content of objects about to enter the treatment chambers 5. The moisture sensors 60, 61 are operatively connected to the control unit 6 and data measured by the moisture sensors 60, 61 is received by the control unit 6 for processing.

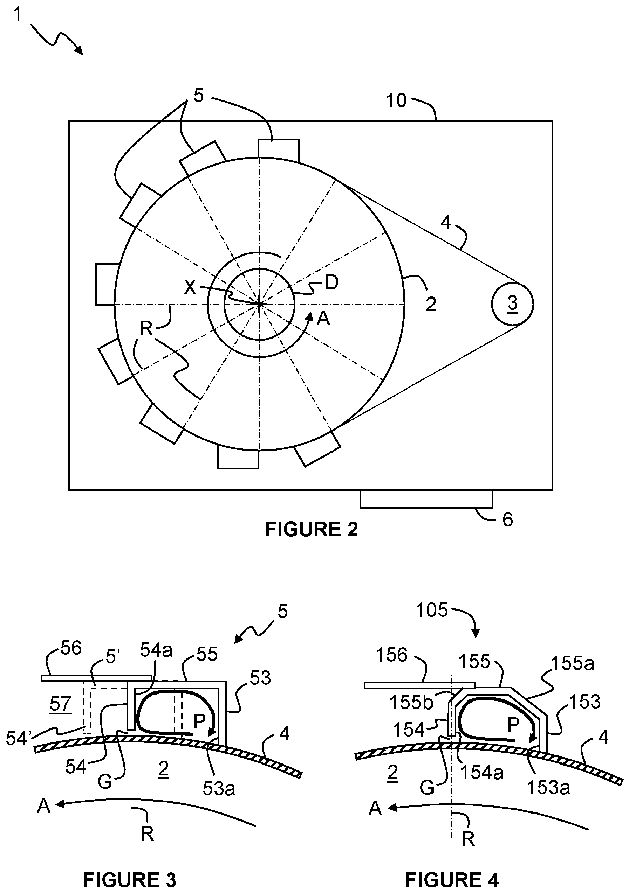

The enclosure 10, shown schematically in Figures 1 and 2, includes a frame with side panels 11 and a top panel 12. The drum 2 is substantially cylindrical, is rotatably mounted to the frame of the enclosure 10 in a vertical orientation and is rotationally driven about its axis X by a drive motor D in direction A. Drive motor D is an electric motor in this example. The tail roller 3 is also substantially cylindrical, but with a smaller diameter than the drum 2, and is also rotatably mounted to the frame of the enclosure 10 in an orientation that is substantially parallel to the drum 2.

The abrasive belt 4 includes a coating of sand or grit on a backing of cloth, paper or plastics, the particles being held in place by a resin or like bond. The abrasive belt 4 is mounted over the drum 2 and tail roller 3 and is held in tension therebetween such that rotation of the drum 2 causes the abrasive belt 4 to drive the tail roller 3 to rotate. It will be appreciated that the drive motor D may be coupled to the tail roller 3 instead of the drum 2 in some examples.

The treatment chambers 5 are equidistantly spaced about the circumferential portion of the drum 2 that is covered by the abrasive belt 4. Each treatment chamber 5 extends generally parallel to the axis X of the drum 2 and includes an elongate, open channel section mounted with its open side facing the drum 2 such that the abrasive belt 4 forms a wall of the treatment chamber 5. Each treatment chamber 5 includes an inlet 50 at its upper end, a primary outlet 51 at its lower end and a secondary outlet 52 along its length.

Each treatment chamber 5 also includes a first, upstream wall 53, a second, downstream wall 54 and a third, intermediate wall 55 perpendicular to, and joining, the first and second walls 53, 54 to describe a base of the treatment chamber 5, opposite the abrasive belt 4. The upstream wall 53 includes an inner, upstream face 53a and the downstream wall 54 includes an inner, downstream face 54a. The open side of each treatment chamber 5 is described between the upstream and downstream faces 53a, 54a.

The upstream wall 53 terminates adjacent the abrasive belt 4, with minimal clearance simply to avoid contact with the abrasive surface. Contrastingly, the downstream wall 54 is spaced from the belt 4 to provide a gap G sufficient to allow abraded material to pass therethrough, in use, thereby providing the secondary outlet 52. An optional extension wall 56 is secured to the third wall 55 and extends from the second, downstream wall 55, is substantially perpendicular thereto and describes, with the downstream wall 55, abrasive belt 4 and an adjacent treatment chamber 5, a discharge area 57. A vacuum source (not shown) draws abraded material from the discharge area 57 to a storage container (not shown).

Each treatment chamber 5 also includes three pressure sensors 62, 63, 64 mounted to the third wall 55. A first pressure sensor 62 is mounted adjacent the inlet 50 for measuring the pressure in an inlet region of the treatment chamber 5. A second pressure sensor 63 is mounted between the inlet 50 and the primary outlet 51 for measuring the pressure in a middle region of the treatment chamber 5. The third pressure sensor 64 is mounted adjacent the primary outlet 51 for measuring the pressure in an outlet region of the treatment chamber 5. The pressure sensors 62, 63, 64 are operatively connected to the control unit 6 and data measured by the pressure sensors 62, 63, 64 is received by the control unit 6 for processing.

The third wall 55 in this example is pivotally connected at its top by a hinge H relative to the first and second walls 53, 54 and is operatively connected to an actuator 65 adjacent its lower end. The actuator 65 is operatively connected to the control unit 6 for receiving control signals therefrom. As such, the orientation of the third wall 55 may be adjusted to vary the depth of the treatment chamber 5 along its length. It has been observed that increasing the depth of the chamber results in an increase in pressure in that area. As explained in EP 2094389, the applied pressure required to remove subsequent layers of whitened rice, for example, increases as the rice whitens. This is due to the higher toughness of the core of the grain. Consequently, gradually increasing the pressure exerted on the grains as they travel through the treatment chamber 5 maintains a consistent rate of removal of surface material.

Moreover, the abrading apparatus 1 in this example also includes an adjustable slide gate mechanism 66 adjacent the primary outlet 51. This slide gate mechanism 66 is adjustable to increase or decrease the size of the primary outlet 51. The slide gate mechanism 66 is operatively connected to the control unit 6 for receiving control signals therefrom to adjust its position (e.g. via an actuator thereof). As outlined above, the pressure within the treatment chamber 5 is also dependent upon the size of the primary outlet 51, which throttles the flow of objects flowing through the treatment chamber 5. As such, adjustment of the size of the primary outlet 51 using the adjustable slide gate mechanism 66 provides another control of the back pressure within the treatment chamber.

In use, the drive motor D effects the rotation of drum 2 in direction A, while the objects to be abraded are loaded into the hopper 20 and fed via the feed pipes 21 to the inlet 50 of treatment chambers 5. As the drum 2 rotates, it abrades the objects adjacent to its abrasive surface to remove a portion of the surface material. The objects pass from the inlet 50 to the primary outlet 51 of each treatment chamber 5, the abraded material being urged through the gap G under the downstream wall 54 and directed by the extension wall 56 to the discharge area 57 and transferred to a storage container (not shown) under the force of gravity and/or suction.

The objects circulate within the treatment chamber 5 along a peripheral flow path P under the action of the abrasive belt 4. The primary outlet 51 is smaller than both the inlet 50 and cross-sectional area within the treatment chamber 5, so as to throttle the flow of objects, thereby creating a back pressure within the treatment chamber 5. This back pressure urges the flowing objects against the abrasive belt 4, thereby removing one or more outer layers of the objects.

The objects entrained with the abrasive belt 4 are forced against the downstream wall 54 before riding up the downstream wall 54 and flowing back toward the upstream wall 53 along the intermediate wall 55. As such, the downstream wall 54 functions as a milling wall 54. As explained above, the material removed passes under the downstream milling wall 54 through the gap G and into the discharge area 57, while the abraded objects leave the chamber through the primary outlet 51. The treated objects are thus collected separately from the material removed and, for example, are passed into collection bags (not shown).

As illustrated more clearly in Figures 2 and 3, the downstream milling wall 54 of each treatment chamber 5 and its inner milling face 54a are substantially aligned with a radial plane R of the drum 2. As a result, the downstream milling wall 54 and its inner milling face 54a are substantially perpendicular to the tangential flow direction of the impacting objects. This is in contrast to the arrangement described in EP 0755304, in which the chamber position is depicted in dotted lines by the reference numeral 5' in Figure 3. The milling wall 54' of this chamber 5' forms an acute angle with the abrasive belt 4, which is believed to cause the objects to be prone to becoming wedged briefly adjacent the gap G. This, it is believed, abrades the objects more aggressively, which increases the instances of broken objects and results in the chamber 5' cocking slightly in the direction of the peripheral flow path P.

As such, by moving the downstream milling wall 54 of the treatment chamber 5 toward the radial plane R of the drum 2, it is believed that the objects move more readily along the peripheral flow path P. It has been observed that this repositioning of the treatment chambers 5 not only reduces the instances of broken objects, but it also reduces the energy consumption of the abrading apparatus 1, as compared to the chamber arrangement described in EP 0755304. Whilst moving the downstream milling wall 54 to be substantially aligned with the radial plane R has been found to yield the most marked improvement, significant improvements have been observed when the distance between the radial plane R and the downstream face 54a is less than ¼, ½ or even ¾ of the distance between the radial plane and the upstream face.

Figure 4 illustrates a treatment chamber 105 according to another example, which is similar to the treatment chamber 5 described above, wherein like features are labelled with like references with the addition of a preceding '1'. The treatment chamber 105 according to this example differs in that it is shaped to shaped to approximate the peripheral flow path P of the objects. In particular, treatment chamber 105 is asymmetric, in contrast with the rectangular cross-section of the treatment chamber 5 described above.

In this example, the third wall 155 is joined to the first, upstream wall 153 by a first chamfer wall 155a and is joined to the second, downstream milling wall 154 by a second chamfer wall 155b. The first chamfer wall 155a is larger than the second chamfer wall 155b, thereby providing an asymmetric cross-section along the treatment chamber 105. It will be appreciated by those skilled in the art that, in some examples, the third wall 155 may be at least partially curved, for example to provide a treatment chamber having a part-elliptical, part-obround or part-ovoid cross-section.

This treatment chamber 105 is similar to the treatment chamber disclosed in EP 2094389, but as with the treatment chamber 5 in the example above, it is displaced so that the downstream milling wall 154 is substantially aligned with the radial plane R of the drum 2. This chamber design therefore incorporates the benefits described in EP 2094389, wherein regions of flow stagnation are minimised. This inhibits objects from passing from the inlet 50 to the outlet 51 untreated or under-treated, thereby improving the consistency of treatment. It will be appreciated

Another feature of the abrading apparatus 1 is the provision of closed loop control. More specifically, the apparatus 1 is configured to monitor a plurality of process variables and to control the operation of the machine according to the monitored process variables. In this example, the process variables include moisture measured by the moisture sensors 60, 61, pressure measured by the pressure sensors 62, 63, 64 and current draw of the drive motor D measured by an ammeter (not shown) operatively connected thereto. The control parameters in this example include the rotational speed of the drive motor D, the depth variation of the treatment chamber 5 (controlled by the actuator 65 which changes the orientation of the third wall 55) and the size of the primary outlet 51 (controlled by the slide gate mechanism 66).

In use, the control unit 6 monitors the process variables and controls automatically the control parameters in response thereto. For example, if the moisture measured by the first moisture sensor 60 is less than that measured by the second moisture sensor 61, this suggests that the grains in the upper portion of the hopper 20 are drier than those in the lower portion of the hopper 20 and will therefore require higher processing pressures. When the moisture measured by the second moisture sensor 61 drops to correspond to this, lower value, the control unit 6 may control, after an appropriate delay, the slide gate mechanism 66 to change the size of the primary outlet 51 and/or the actuator 65 to change the orientation of the third wall 55 to alter the depth variation of the treatment chamber 5.

This, in turn, increases the back pressure within the treatment chamber 5 to maintain a substantially constant treatment of the grains. The pressure measured by the pressure sensors 62, 63, 64 and/or the current draw of the drive motor D measured by the ammeter (not shown) may be used by the control unit 6 to determine the effectiveness of the adjustment. It is also envisaged that the control unit 6 may include reference tables containing appropriate reference pressures and/or current draw values for particular moisture contents. In such cases, the measured values may be cross-referenced with those in the reference tables and adjustments made accordingly.

In addition, if a shift is detected in the pressure measured by the pressure sensors 62, 63, 64 and/or the current draw of the drive motor D measured by the ammeter (not shown), this may be indicative of a damaged or slipping abrasive belt 4 or of a change in the type of grain being processed. The control unit 6 may be configured to take one of a series of predetermined actions in response to the detected shift. For example, if the detected shift suggests that the abrasive belt 4 is damaged or slipping (e.g. if both the pressure and current draw decrease despite a constant rotational speed of the drive motor), the control unit 6 may stop the apparatus 1 and alert an operator or central control system (not shown) to the fault. Similarly, if the detected shift suggests that there has been an unexpected change in the type of grain being processed (e.g. if both the pressure and current draw increase despite a constant rotational speed and moisture readings), the control unit 6 may also stop the apparatus 1 and alert an operator or central control system (not shown).

In another example, the control unit 6 may be configured to receive an input, either automatically from a feed system (not shown) or manually from an operator (not shown), corresponding to a new grain type loaded into the hopper 20. In such a case, if the detected shift suggests a change in the type of grain being processed corresponding to the expected grain, the control unit 6 may alter automatically the appropriate control parameters. The aforementioned reference tables may include anticipated changes in process variables to identify the new type of grain being processed and/or the appropriate control parameters to be applied for the new grain type.

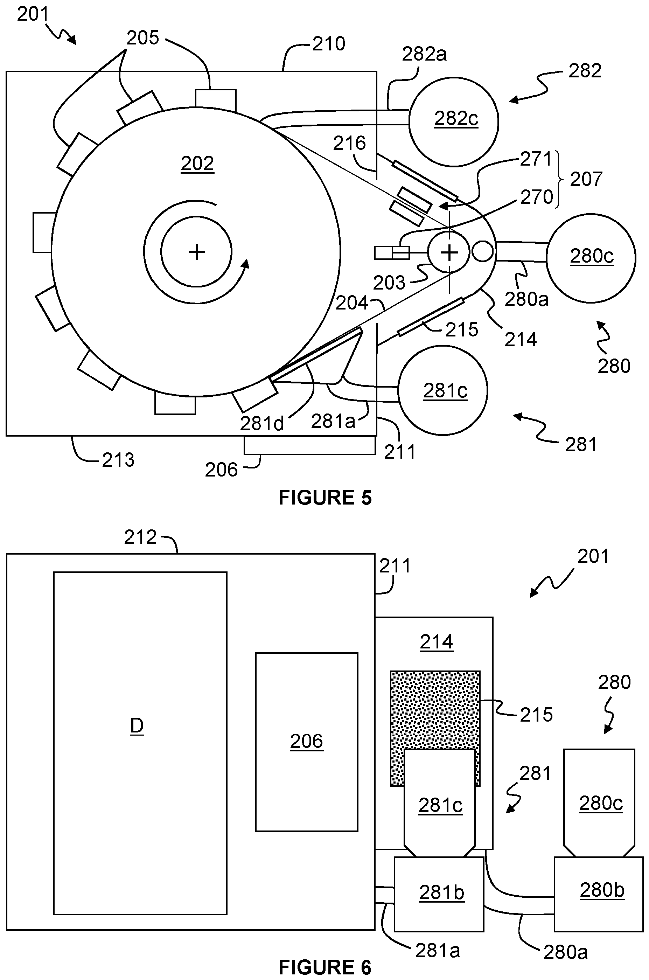

Turning now to Figures 5 to 7, there is shown an abrading apparatus 201 according to another example, which is similar to the abrading apparatus 1 described above, wherein like features are labelled with like references with the addition of a preceding '2'. The abrading apparatus 201 according to this example differs in that the enclosure 210 includes a primary chamber 213 and an isolation chamber 214 and the apparatus 201 includes a tracking system 207 and three suction assemblies 280, 281, 282.

The primary chamber 213 of the enclosure 210 according to this example is substantially cuboidal, surrounds the drum 202 and chambers 205 and includes an access door D. One of the side walls 211 of the primary chamber 213 extends between the drum 202 and the tail roller 203 and includes an opening through which the endless abrasive belt 204 extends between the drum 202 and tail roller 203. The isolation chamber 214 extends from this opening and encloses the tail roller 203, together with part of the endless abrasive belt 204 which extends between the drum 202 and tail roller 203.

In this example, the isolation chamber 214 approximates the shape of the tail roller 203 and the enclosed part of the endless abrasive belt 204. As such, the isolation chamber 214 is of a substantially prism-shape with a rounded apex. The isolation chamber 214 includes a transparent or translucent window 215 on each of its sides to enable the abrasive belt 204 to be viewed therethrough. The windows 215 are formed of a sheet of transparent or translucent acrylic in this example.

The isolation chamber 214 also includes a screen 216 extending from the interface joining the primary chamber 213 and the isolation chamber 214. The screen 216 terminates adjacent the abrasive belt 204 for inhibiting air entrained with the abrasive belt 204 from entering the isolation chamber 214. In this example, the screen 216 is a solid wall of sheet metal, but it may be replaced with a flexible sheet or brush element.

The purpose of the isolation chamber 214 is to inhibit abraded material from entering the vicinity of the tail roller 203, thereby reducing energy consumption and extends the useful life of the abrasive belt 204. As explained above, it is believed that air entrained with the abrasive belt 204 includes by-products of the treated small objects, which can be released into the air within the enclosure and become trapped between the tail roller 203 and abrasive belt 204, forced into the rear side of the belt 204 and become wedged between the drum 202 and the belt 204. This is believed to cause the abrasive belt 204 to stand proud of the drum 202 and urge it toward the treatment chambers 205, thereby causing variations in treatment characteristics and damaging the abrasive belt 204 prematurely.

A first suction assembly 280 includes a vacuum pipe 280a, a vacuum pump 280b and a storage bag 280c. The vacuum pipe 280a is fluidly connected to a base of the isolation chamber 214 adjacent the apex thereof. The vacuum pump 280b is configured to evacuate air containing abraded material from the isolation chamber 214. This reduces the amount of the aforementioned by-products in the isolation chamber 214, thereby inhibiting them from becoming trapped between the tail roller 203 and the abrasive belt 204. The abraded material and by-products so evacuated are captured within the storage bag 280c.

A second suction assembly 281 includes a vacuum pipe 281a, a vacuum pump 281b, a storage bag 281c and an isolation plate 281d. The isolation plate 281d is mounted to the frame of the enclosure 210 and extends from the last treatment chamber 205. The isolation plate 281d is mounted adjacent the abrasive belt 204 to describe a plenum therebetween to which the vacuum pipe 281a of the second suction assembly 281 is fluidly connected. The vacuum pump 281b is configured to evacuate air containing abraded material from the plenum described between the isolation plate 281d and the abrasive belt 204. This reduces the quantity of by-products on the abrasive belt 204 and/or entrained therewith prior to its entry into the isolation chamber 214. The abraded material and by-products so evacuated are captured within the storage bag 281c.

The third suction assembly 282 also includes a vacuum pipe 282a, a vacuum pump (not shown) and a storage bag 282c. The vacuum pipe 281a is fluidly connected to the discharge areas 57 (not shown in Figures 5 to 7) described between each of the isolation chambers 205. The vacuum pump (not shown) is configured to evacuate air containing abraded material from the discharge areas, which is then captured within the storage bag 282c.

The tail roller 203 is pivotally connected to the enclosure 210 at its upper end and the tracking system 207 includes an actuator 270 operatively connected to a lower end of the tail roller 203 for adjusting its orientation relative to that of the drum 202. The tail roller 203 is preferably rotatably mounted to a cradle (not shown), which itself is pivotally mounted relative to the drum 202 at or adjacent its uppermost end. This enables the actuator 270 to be operatively connected to the cradle at any position along its length. The actuator 270 is operatively connected to the control unit 206 for receiving commands therefrom to adjust the orientation of the tail roller 203 relative to the drum 202.

The tracking system 207 also includes a belt sensing assembly 271 mounted to the frame of the enclosure 210 adjacent an upper edge of the abrasive belt 204. The belt sensing assembly 271 is operatively connected to the control unit 206 and configured to determine the position of the abrasive belt 204. The movement of the abrasive belt 204 along the drum 202 and tail roller 203 is monitored by the control unit 206, which is configured to adjust the orientation of the tail roller 203 automatically, thereby to track the abrasive belt 204 up or down to maintain its position within a predetermined operating range. As will be appreciated by the skilled person, changing the orientation of the tail roller 203 will generate a different tension in the abrasive belt 204 toward one end of the tail roller 203 as compared with the tension at the other end. This tension differential creates an axial force on the abrasive belt 204, which causes it to move axially along the tail roller 203 and drum 202.

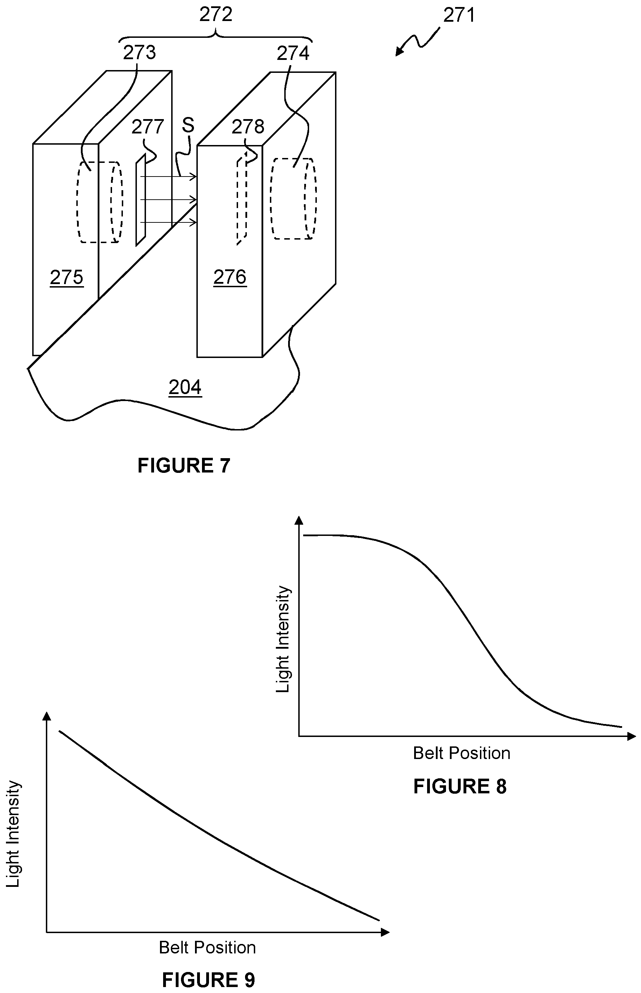

The belt sensing assembly 271, shown more clearly in Figure 7, includes an analogue sensing means 272 for determining its axial position of the abrasive belt 204 on the drum 202 and tail roller 203. This is in contrast to the use of multiple separate sensors, which provide individual digital signals when certain threshold positions are detected. The use of an analogue sensing means 272 has been found to be surprisingly effective at optimising the operation of the abrading apparatus 201. More specifically, the control unit 206 is able to constantly and gradually adjust the orientation of the tail roller 203 on the basis of the analogue signal measured by the analogue sensing means 272. This has been found to prolong the life of the abrasive belt 204. Without wishing to be bound by any theory, this is believed to be the result of less aggressive forces being applied to the abrasive belt 204 during such adjustment.

In this example, the analogue sensing means 272 is only adjacent the upper edge of the abrasive belt 204, but it may also be advantageous to include such a sensing means 272 adjacent its lower edge. The analogue sensing means 272 includes a transmitter 273 and a sensor or receiver 274. The transmitter 273 is received in a transmitter housing 275 on a first side of the abrasive belt 204, while the sensor 274 is received in a sensor housing 276 on a second side of the abrasive belt 204. The housings 275, 276 each include an elongate slot or window 277, 278 which faces the abrasive belt 204, with its longitudinal dimension perpendicular to the upper edge of the abrasive belt 204. In this example, each window 277, 278 is 10mm in length.

The transmitter 273 is operable to transmit an analogue signal S through the window 277 in the transmitter housing 275, through the window 278 in the sensor housing 276 and toward the sensor 274. The sensor 274 is operable to detect or measure the analogue signal S transmitted by the transmitter 273. However, the abrasive belt 204 masks part of the signal S as it passes between the facing windows 277, 278. As such, the magnitude of the signal S detected or measured by the sensor 274 is a function of the position of the abrasive belt 204. More specifically, the higher the abrasive belt 204, the weaker the signal S received by the sensor 274.

In this example, the transmitter 273 is a light transmitter or a light source operable to emit visible light, preferably white light. The transmitter 273 preferably includes one or more light emitting diodes (LEDs) that are operable to emit at least 200 lumens, such as 300 lumens or more. The sensor 274 is a light sensor, specifically a photoelectric device or a photo sensor. The light sensor 274 can be a photoresistor or light dependent resistor, in which case it may have a major dimension of 10 mm to ensure that it receives all light which passes through the window 278. Alternatively, the light sensor 274 can be a photodiode.

As the abrasive belt 204 moves up and down relative to the belt sensing assembly 271, the extent to which the light emitted by the transmitter 273 is masked by the abrasive belt 204 varies. This changes the intensity of light detected or measured by the sensor 274, thereby providing a reading that is indicative of the position of the belt. This reading is then used by the control unit 206 to control the tracking system 207, as outlined above, to maintain the abrasive belt 204 in the desired position range.

Figure 8 illustrates the relationship between the light intensity detected by the light sensor 274 and the actual measured position of the abrasive belt 204, where the light sensor 274 is a photoresistor. Figure 9 illustrates the same relationship, but using a light sensor 274 that is a photodiode. As illustrated by these Figures, the change in light intensity detected by the light sensor 274 is more acute when the edge of the abrasive belt 204 is adjacent the centre of the slot when the light sensor 274 is a photoresistor, whilst the relationship is relatively linear across the entire range of movement of the abrasive belt 204 in the case of the photodiode. The photodiode may be favoured in certain examples because of this, linear relationship. However, adjustment of the orientation of the tail roller 203 may be carried out using a control algorithm that favours the relationship provided by the photoresistor in certain examples.

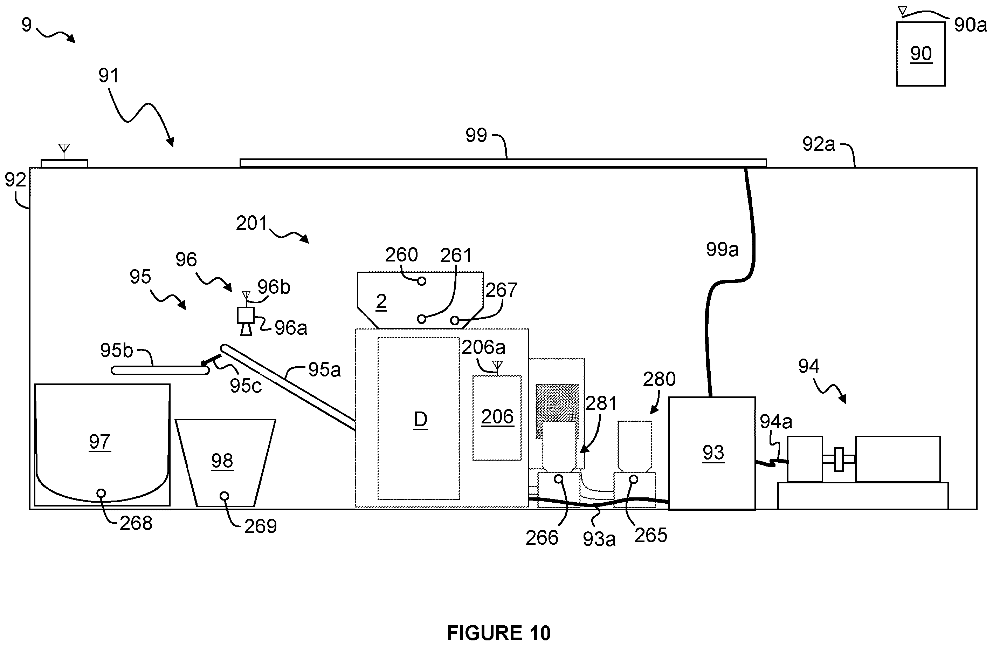

Turning now to Figure 10, there is shown a milling system 9 including a remote server 90 and a portable mill 91. The portable mill 91 includes a shipping container 92 within which is received an abrading apparatus 201 as described above, together with an energy storage device 93, a diesel generator 94, a discharge conveyor 95, a vision system 96, a storage container 97 for treated objects and a waste container 98 for rejected objects. The portable mill 91 also includes solar panels 99 mounted to a roof 92a of the shipping container 92. The energy storage device 93, diesel generator 94, discharge conveyor 95 and vision system 96 are all operatively connected to, and controlled by, the control unit 206 of the abrading apparatus 201.

The abrading apparatus 201 includes moisture sensors 260, 261 and pressure sensors (not shown) similar to those described above in relation to the first example. Each suction assembly 280, 281, 282 includes a weight sensor 265, 266 (only two of which are shown in Figure 10) for weighing the abraded material contained in their respective storage bags 280c, 281c, 282c. Similarly, weight sensors 267, 268, 269 are also included in each of the hopper 220, the storage container 97 and waste container 98. In addition, the control unit 206 includes a wireless telecommunications device 206a for communicating with a corresponding wireless telecommunications device 90a of the remote server 90.

The energy storage device 93 is electrically connected to the abrading apparatus 201 by a cable 93a for supplying power thereto. The diesel generator 94 and solar panels 99 are both electrically connected to the energy storage device 93 by respective cables 94a, 99a and supply generated thereto for storage and subsequent supply to the abrading apparatus 201. The discharge conveyor 95 is a split conveyor assembly which includes a first, inclined conveyor 95a that receives abraded objects from the treatment chambers 205 and a second, feed conveyor 95b with a first, inlet end above the waste container 98 and below but offset from the first conveyor 95a and a second, outlet end above the storage container 97. The discharge conveyor 95 also includes a reject flap 95c between the first and second conveyors 95a, 95b. The reject flap 95c is pivotable between a first position (shown in Figure 10), in which it directs abraded objects from the first conveyor 95a onto the second conveyor 95b, and a second position, in which abraded objects from the first conveyor 95a are directed into the waste container 98.

In this example, the vision system 96 includes a camera 96a and a wireless transmitter 96b for transmitting captured image data to the control unit 206. The camera 96a is located adjacent an upper end of the first conveyor 95a for capturing image data of abraded objects conveyed therealong. The image data captured by the vision system 96 is processed, either locally by the vision system 96 or by the control unit 206, to compare the image data to a reference image, outline or model to identify treated objects that should be classified as damaged or broken. The vision system 96 or control unit 206 then determines a value indicative of the quantity or proportion of damaged or broken objects treated by the abrading apparatus 201 based on the identification.

In this example, the control unit 206 is configured to operate the reject flap 95c to direct abraded objects into the waste container 98 when the determined value is above a predetermined threshold.

In addition, the calculated value determined from the image data captured by the vision system 96 can also be used by the control unit 206 as a process variable for controlling the operation of the abrading apparatus 201, as described above in relation to the abrading apparatus 1 according to the first example. Similarly, the control unit 206 may process the values measured by the weight sensors 265, 266, 267, 268, 269 to determine the quantity of abraded material generated over a predetermined period of time, the quantity of objects loaded into the hopper 220, the quantity of treated objects and the quantity of damaged or broken objects. These values may be used as further process variables in the closed loop control algorithms outlined above. More specifically, some or all of the current draw of the motor (from the ammeter), rotational speed of the motor, moisture levels (from moisture sensors 260, 261), chamber pressures (from the pressure sensors), image data (obtained from the vision system 96), the quantity of abraded material (from weight sensors 265, 266), the quantity of material loaded in the hopper (from weight sensor 267), the quantity of treated objects (from weight sensor 268) and/or the quantity of damaged or broken objects (from weight sensors 269) may be used by the control unit 206 to monitor and/or control the operation of the apparatus 201.

One or more aspects of the operation of the portable mill 91 may be monitored and/or controlled by the remote server 90. For example, the control unit 206 may be configured to send to the remote server 90, via the wireless telecommunications devices 206a, 90a, data relating to one or more of the aforementioned process variables and/or relating to one or more control parameters. The remote server 90 may be configured to send to the control unit 206, via the wireless telecommunications devices 90a, 206a, one or more commands relating to one or more control parameters. One or more of the control features described above in relation to the control unit 6, 206 may be incorporated in or carried out by the remote server 90. Alternatively, the remote server 90 may simply be configured to enable or disable one or more features of the portable mill 91, such as the power supplied to the abrading apparatus 201.

The remote server 90 may also include a costing module or algorithm configured to calculate a cost associated with one or more of the operating and/or control parameters and/or an operating period. For example, the costing module may be configured to calculate a cost based on a period of operation. Alternatively, the costing module may be configured to calculate a cost based on a weight of objects loaded in the hopper 220 and/or a weight of treated objects and/or a weight of damaged or broken objects and/or a weight of abraded material. The control unit 206 may be configured to monitor a change in such weights over time, as detected by the weight sensors 265, 266, 267, 268, 269 and/or may include one or more redundant sensors for ensuring the accuracy of the quantity of objects treated.

The remote server 90 may include a customer database, which may include one or more customer details (e.g. one or more of a contact name, address, telephone number, account number, credit limit, rating or history, payment terms and the like). The remote server 90 may include an invoicing module or algorithm configured to generate an invoice based on one or more costs calculated by the costing module or algorithm.

The control unit 206 may include an input means (not shown) for capturing data relating to a customer or payment means (e.g. credit card). The control unit 206 may be configured to send to the remote server 90, via the wireless telecommunications devices 206a, 90a, data relating to the customer or payment means.

The remote server may comprise a payment module or algorithm configured to associate an invoice generated by the invoicing module or algorithm with a customer or payment means. The payment module or algorithm may be configured to retrieve a payment from the payment means or a payment means associated with a customer. The retrieved payment may correspond to an invoice generated by the invoicing module.

Other features associated with automatic payment means will be appreciated by those skilled in the art.

For example, the abrading apparatus 1, 201 need not include all of the features described herein. In addition, the abrading apparatus 1, 201 may include one or more further features, such as a further vision system configured to capture image data relating to the abraded material.

## Claims

1. An abrading apparatus (1, 201) comprising a drum (2, 202), a movable abrasive surface (4, 204) about at least part of the circumferential surface of the drum and one or more treatment chambers (5, 105, 205) mounted about the drum, each treatment chamber having first and second opposite wall portions (53, 54, 153, 154) extending toward the abrasive surface and a third wall portion (55, 155, 155a, 155b) adjoining the first and second wall portions, the first wall portion comprising an upstream face (53a, 153a) and the second wall portion comprising a downstream face (54a, 154a), the upstream and downstream faces describing an open side facing the drum such that the abrasive surface forms a wall of the chamber, **characterised in that** the drum comprises a radial plane (R) parallel to the downstream face of the chamber and the distance between the radial plane and the downstream face is less than the distance between the radial plane and the upstream face such that the downstream face is adjacent the radial plane.

2. An abrading apparatus according to claim 1, wherein the distance between the radial plane (R) and the downstream face (54a, 154a) is less than ¾ of the distance between the radial plane and the upstream face (53a, 153a).

3. An abrading apparatus according to claim 1 or claim 2, wherein the distance between the radial plane (R) and the downstream face (54a, 154a) is less than ½ of the distance between the radial plane and the upstream face (53a, 153a).

4. An abrading apparatus according to any preceding claim, wherein the downstream face (54a, 154a) is substantially aligned with the radial plane (R).

5. An abrading apparatus according to any preceding claim, wherein the downstream face (54a, 154a) is substantially perpendicular to a facing portion of the abrasive surface (4, 204).

6. An abrading apparatus according to any preceding claim, wherein the second wall portion (54, 154) is spaced from the abrasive surface (4, 204) to provide a gap (G) therebetween and the or each treatment chamber (5, 105, 205) is elongate, extends parallel to the axis (X) of the drum (2, 202) and includes an inlet (50) at a first end thereof, a primary outlet (51) at a second end thereof and a secondary outlet (52) provided by the gap.

7. An abrading apparatus according to any preceding claim, wherein each treatment chamber (105) comprises an open channel section having an asymmetric cross-section.

8. An abrading apparatus according to any preceding claim comprising a roller (3, 203) spaced from and substantially parallel to the drum (2, 202), an endless abrasive loop (4, 204) mounted on the drum and roller and drive means (D) operable to rotate the drum and roller.

9. An abrading apparatus according to claim 8 comprising a tracking means (207) for adjusting automatically the axial position of the abrasive loop (204) relative to the drum (202) and roller (203), wherein the tracking means comprises an analogue sensing means (272) for determining the position of the abrasive loop.

10. An abrading apparatus according to claim 8 or claim 9 comprising an enclosure (210) within which is received the drum (202), the roller (203), the endless abrasive loop (204) and the treatment chamber(s) (205), wherein the enclosure comprises an isolation chamber (214) which houses at least part of the roller and inhibits, in use, air entrained with the abrasive loop from entering the isolation chamber.

11. An abrading apparatus according to any preceding claim comprising control means (6, 206) and sensing means (60, 61, 62, 63, 64, 96, 260, 261, 265, 266, 267, 268, 269), wherein the control means is configured to vary, in use, automatically one or more control parameters of the apparatus in response to one or more process variables sensed by the sensing means.

12. An abrading apparatus according to claim 11, wherein the sensing means (60, 61, 62, 63, 64, 96, 260, 261, 265, 266, 267, 268, 269) comprises one or more moisture sensors (60, 61, 260, 261) for measuring the moisture of objects to be treated by the treatment chambers (5, 105, 205) and/or one or more pressure sensors (62, 63, 64) for measuring the pressure in the treatment chamber(s) and/or an ammeter for measuring the current draw of the drive motor and/or one or more weight sensors (265, 266, 267, 268, 269) for measuring the quantity of objects loaded into or processed by the apparatus.

13. An abrading apparatus according to claim 11 or claim 12, wherein the one or more control parameters comprises the speed of the motor (D).

14. A portable mill (9) comprising an abrading apparatus according to any preceding claim, power supply means (93, 94, 99) for powering the abrading apparatus and control means (206) for controlling one or more control parameters of the abrading apparatus and/or of the power supply means, the control means comprising wireless telecommunication means (206a) for communicating with a remote server (90), wherein the control means is configured to control at least one control parameter of the abrading apparatus and/or of the power supply means in response to a command received, in use, by a remote server.

15. An abrading system comprising a remote server (90) and one or more portable mills (9) according to claim 14.

## Patentansprüche

1. Schleifvorrichtung (1, 201), umfassend eine Trommel (2, 202), eine bewegliche Schleiffläche (4, 204) um mindestens einen Teil der Umfangsfläche der Trommel herum und eine oder mehrere Behandlungskammern (5, 105, 205), die um die Trommel herum montiert sind, wobei jede Behandlungskammer einen ersten und einen zweiten gegenüberliegenden Wandteil (53, 54, 153, 154), die sich in Richtung der Schleiffläche erstrecken, und einen dritten Wandteil (55, 155, 155a, 155b), der an den ersten und zweiten Wandteil angrenzt, aufweist, wobei der erste Wandteil eine stromaufwärtige Fläche (53a, 153a) umfasst und der zweite Wandteil eine stromabwärtige Fläche (54a, 154a) umfasst, wobei die stromaufwärtige und die stromabwärtige Fläche eine offene Seite beschreiben, die der Trommel zugewandt ist, sodass die Schleiffläche eine Wand der Kammer bildet, **dadurch gekennzeichnet, dass** die Trommel eine Radialebene (R) parallel zu der stromabwärtigen Fläche der Kammer umfasst und der Abstand zwischen der Radialebene und der stromabwärtigen Fläche kleiner als der Abstand zwischen der Radialebene und der stromaufwärtigen Fläche ist, sodass die stromabwärtige Fläche neben der Radialebene liegt.

2. Schleifvorrichtung nach Anspruch 1, wobei der Abstand zwischen der Radialebene (R) und der stromabwärtigen Fläche (54a, 154a) weniger als ¾ des Abstands zwischen der Radialebene und der stromaufwärtigen Fläche (53a, 153a) beträgt.

3. Schleifvorrichtung nach Anspruch 1 oder Anspruch 2, wobei der Abstand zwischen der Radialebene (R) und der stromabwärtigen Fläche (54a, 154a) weniger als ½ des Abstands zwischen der Radialebene und der stromaufwärtigen Fläche (53a, 153a) beträgt.

4. Schleifvorrichtung nach einem der vorhergehenden Ansprüche, wobei die stromabwärtige Fläche (54a, 154a) im Wesentlichen mit der Radialebene (R) ausgerichtet ist.

5. Schleifvorrichtung nach einem der vorhergehenden Ansprüche, wobei die stromabwärtige Fläche (54a, 154a) im Wesentlichen senkrecht zu einem zugewandten Teil der Schleiffläche (4, 204) verläuft.

6. Schleifvorrichtung nach einem der vorhergehenden Ansprüche, wobei der zweite Wandteil (54, 154) von der Schleiffläche (4, 204) beabstandet ist, um einen Spalt (G) dazwischen bereitzustellen, und die oder jede Behandlungskammer (5, 105, 205) langgestreckt ist, sich parallel zu der Achse (X) der Trommel (2, 202) erstreckt und einen Einlass (50) an einem ersten Ende davon, einen primären Auslass (51) an einem zweiten Ende davon und einen sekundären Auslass (52), der durch den Spalt bereitgestellt wird, beinhaltet.

7. Schleifvorrichtung nach einem der vorhergehenden Ansprüche, wobei jede Behandlungskammer (105) einen offenen Kanalabschnitt mit einem asymmetrischen Querschnitt umfasst.

8. Schleifvorrichtung nach einem der vorhergehenden Ansprüche, umfassend eine Walze (3, 203), die von der Trommel (2, 202) beabstandet und im Wesentlichen parallel zu dieser verläuft, eine endlose Schleifschleife (4, 204), die an der Trommel und der Walze montiert ist, und Antriebsmittel (D), die betätigbar sind, um die Trommel und die Walze zu drehen.

9. Schleifvorrichtung nach Anspruch 8, umfassend ein Verfolgungsmittel (207) zum automatischen Einstellen der axialen Position der Schleifschleife (204) relativ zu der Trommel (202) und der Walze (203), wobei das Verfolgungsmittel ein analoges Erfassungsmittel (272) zum Bestimmen der Position der Schleifschleife umfasst.

10. Schleifvorrichtung nach Anspruch 8 oder Anspruch 9, umfassend ein Gehäuse (210), in dem die Trommel (202), die Walze (203), die endlose Schleifschleife (204) und die Behandlungskammer (n) (205) aufgenommen sind, wobei das Gehäuse eine Isolationskammer (214) umfasst, die zumindest einen Teil der Walze unterbringt und im Gebrauch verhindert, dass Luft, die mit der Schleifschleife mitgerissen wird, in die Isolationskammer eintritt.

11. Schleifvorrichtung nach einem der vorhergehenden Ansprüche, umfassend Steuermittel (6, 206) und Erfassungsmittel (60, 61, 62, 63, 64, 96, 260, 261, 265, 266, 267, 268, 269), wobei die Steuermittel dazu konfiguriert sind, im Gebrauch automatisch einen oder mehrere Steuerparameter der Vorrichtung als Reaktion auf eine oder mehrere Prozessvariablen, die durch die Erfassungsmittel erfasst werden, zu variieren.

12. Schleifvorrichtung nach Anspruch 11, wobei die Erfassungsmittel (60, 61, 62, 63, 64, 96, 260, 261, 265, 266, 267, 268, 269) einen oder mehrere Feuchtigkeitssensoren (60, 61, 260, 261) zum Messen der Feuchtigkeit von durch die Behandlungskammern (5, 105, 205) zu behandelnden Objekten und/oder einen oder mehrere Drucksensoren (62, 63, 64) zum Messen des Drucks in der (den) Behandlungskammer(n) und/oder ein Amperemeter zum Messen der Stromaufnahme des Antriebsmotors und/oder einen oder mehrere Gewichtssensoren (265, 266, 267, 268, 269) zum Messen der Menge von in die Vorrichtung geladenen oder durch die Vorrichtung verarbeiteten Objekten umfassen.

13. Schleifvorrichtung nach Anspruch 11 oder Anspruch 12, wobei der eine oder die mehreren Steuerparameter die Drehzahl des Motors (D) umfassen.

14. Transportierbare Mühle (9), umfassend eine Schleifvorrichtung nach einem der vorhergehenden Ansprüche, Stromversorgungsmittel (93, 94, 99) zum Versorgen der Schleifvorrichtung mit Strom und Steuermittel (206) zum Steuern eines oder mehrerer Steuerparameter der Schleifvorrichtung und/oder der Stromversorgungsmittel, wobei die Steuermittel drahtlose Telekommunikationsmittel (206a) zum Kommunizieren mit einen Remoteserver (90) umfassen, wobei die Steuermittel dazu konfiguriert sind, mindestens einen Steuerparameter der Schleifvorrichtung und/oder der Stromversorgungsmittel als Reaktion auf einen im Gebrauch von einem entfernten Server empfangenen Befehl zu steuern.

15. Schleifsystem, umfassend einen Remoteserver (90) und eine oder mehrere transportierbare Mühlen (9) nach Anspruch 14.

## Revendications

1. Appareil d'abrasion (1, 201) comprenant un tambour (2, 202), une surface abrasive mobile (4, 204) autour d'au moins une partie de la surface circonférentielle du tambour et une ou plusieurs chambres de traitement (5, 105, 205) montées autour du tambour, chaque chambre de traitement ayant des première et deuxième parties de paroi opposées (53, 54, 153, 154) s'étendant vers la surface abrasive et une troisième partie de paroi (55, 155, 155a, 155b) attenante aux première et deuxième parties de paroi, la première partie de paroi comprenant une face amont (53a, 153a) et la deuxième partie de paroi comprenant une face aval (54a, 154a), les faces amont et aval décrivant un côté ouvert faisant face au tambour de sorte que la surface abrasive forme une paroi de la chambre, **caractérisé en ce que** le tambour comprend un plan radial (R) parallèle à la face aval de la chambre et la distance entre le plan radial et la face aval est inférieure à la distance entre le plan radial et la face amont de sorte que la face aval soit adjacente au plan radial.

2. Appareil d'abrasion selon la revendication 1, dans lequel la distance entre le plan radial (R) et la face aval (54a, 154a) est inférieure aux ¾ de la distance entre le plan radial et la face amont (53a, 153a).

3. Appareil d'abrasion selon la revendication 1 ou la revendication 2, dans lequel la distance entre le plan radial (R) et la face aval (54a, 154a) est inférieure à ½ de la distance entre le plan radial et la face amont (53a, 153a).

4. Appareil d'abrasion selon l'une quelconque des revendications précédentes, dans lequel la face aval (54a, 154a) est sensiblement alignée avec le plan radial (R).

5. Appareil d'abrasion selon l'une quelconque des revendications précédentes, dans lequel la face aval (54a, 154a) est sensiblement perpendiculaire à une partie en regard de la surface abrasive (4, 204).

6. Appareil d'abrasion selon l'une quelconque des revendications précédentes, dans lequel la deuxième partie de paroi (54, 154) est espacée de la surface abrasive (4, 204) pour fournir un espace (G) entre elles et la ou chaque chambre de traitement (5, 105, 205) est allongée, s'étend parallèlement à l'axe (X) du tambour (2, 202) et comprend une entrée (50) au niveau d'une première extrémité de celle-ci, une sortie principale (51) au niveau d'une seconde extrémité de celle-ci et une sortie secondaire (52) fournie par l'espace.

7. Appareil d'abrasion selon l'une quelconque des revendications précédentes, dans lequel chaque chambre de traitement (105) comprend une section de canal ouverte ayant une section transversale asymétrique.

8. Appareil d'abrasion selon l'une quelconque des revendications précédentes, comprenant un rouleau (3, 203) espacé du tambour (2, 202) et sensiblement parallèle à celui-ci, une boucle abrasive sans fin (4, 204) montée sur le tambour et le rouleau et des moyens d'entraînement (D) pouvant fonctionner pour faire tourner le tambour et le rouleau.

9. Appareil d'abrasion selon la revendication 8, comprenant un moyen de suivi (207) pour ajuster automatiquement la position axiale de la boucle abrasive (204) par rapport au tambour (202) et au rouleau (203), dans lequel le moyen de suivi comprend un moyen de détection analogique (272) pour déterminer la position de la boucle abrasive.

10. Appareil d'abrasion selon la revendication 8 ou la revendication 9, comprenant une enceinte (210) à l'intérieur de laquelle est reçu le tambour (202), le rouleau (203), la boucle abrasive sans fin (204) et la ou les chambre(s) de traitement (205), dans lequel l'enceinte comprend une chambre d'isolement (214) qui abrite au moins une partie du rouleau et empêche, en cours d'utilisation, l'air entraîné avec la boucle abrasive d'entrer dans la chambre d'isolement.

11. Appareil d'abrasion selon l'une quelconque des revendications précédentes, comprenant des moyens de commande (6, 206) et des moyens de détection (60, 61, 62, 63, 64, 96, 260, 261, 265, 266, 267, 268, 269), dans lequel les moyens de commande sont configurés pour faire varier, en cours d'utilisation, automatiquement un ou plusieurs paramètres de commande de l'appareil en réponse à une ou plusieurs variables de processus détectées par les moyens de détection.

12. Appareil d'abrasion selon la revendication 11, dans lequel les moyens de détection (60, 61, 62, 63, 64, 96, 260, 261, 265, 266, 267, 268, 269) comprennent un ou plusieurs capteurs d'humidité (60, 61, 260, 261) pour mesurer l'humidité des objets à traiter par les chambres de traitement (5, 105, 205) et/ou un ou plusieurs capteurs de pression (62, 63, 64) pour mesurer la pression dans la ou les chambre(s) de traitement et/ou un ampèremètre pour mesurer l'appel de courant du moteur d'entraînement et/ou un ou plusieurs capteurs de poids (265, 266, 267, 268, 269) pour mesurer la quantité d'objets chargés ou traités par l'appareil.

13. Appareil d'abrasion selon la revendication 11 ou la revendication 12, dans lequel l'un ou plusieurs paramètres de commande comprennent la vitesse du moteur (D).

14. Broyeur portable (9) comprenant un appareil d'abrasion selon l'une quelconque des revendications précédentes, des moyens d'alimentation électrique (93, 94, 99) pour alimenter l'appareil d'abrasion et des moyens de commande (206) pour commander un ou plusieurs paramètres de commande de l'appareil d'abrasion et/ou des moyens d'alimentation électrique, les moyens de commande comprenant des moyens de télécommunication sans fil (206a) pour communiquer avec un serveur distant (90), dans lequel les moyens de commande sont configurés pour commander au moins un paramètre de commande de l'appareil d'abrasion et/ou des moyens d'alimentation électrique en réponse à une commande reçue, en cours d'utilisation, par un serveur distant.

15. Système d'abrasion comprenant un serveur distant (90) et un ou plusieurs broyeurs portables (9) selon la revendication 14.
